# EUROPEAN PATENT APPLICATION

(11) **EP 4 810 583 A1**
(43) Date of publication of application: **23.09.2026**
(21) Application number: 25165401.8
(22) Date of filing: 21.03.2025
(51) Int. Cl.: C09K 5/10, H01M 10/613

(54) **USE OF A DIALKYL CARBONATE AS A LIQUID COOLANT**

(71) Applicant: Oleon N.V., 9940 Evergem (Ertvelde) (BE)
(72) Inventor: BLACH, Philippe, 60700 Saint Martin Longueau (FR); VAN VAERENBERGH, Beau, 1770 Liedekerke (BE); DE SMET, Gilles, 9040 Sint-Amandsberg (BE); VAN HOLEN, Jurgen, 9400 Ninove (BE); DE SCHRIJVER, Bert, 9270 Kalken (BE)
(74) Representative: Santarelli

(57) **Abstract**

The present invention relates to the use of a specific dialkyl carbonate as a liquid coolant.

## Description

The present invention relates to the use of specific dialkyl carbonates as liquid coolants for liquid cooling by direct contact of an electrical device.

A liquid coolant is used to reduce the temperature of a heat-generating device, such as electrical devices, by conducting heat away from the device.

Liquid cooling is a cooling method that consists of using liquids, generally water or specific coolants, to absorb and dissipate the heat from the heat-generating device. Liquid cooling methods appear as a more efficient methods than the traditional air-cooling method, which uses fans and air conditioners to maintain low temperatures, as the thermal conductivity of liquid coolants are higher than the one of air.

In a liquid cooling method by direct contact, the heat-generating device is cooled by bringing a liquid coolant into direct contact with the said device.

The liquid cooling method by direct contact is preferably a single-phase immersion cooling method or a spray liquid cooling method. In those liquid cooling methods, the liquid coolant does not change state upon functioning.

Upon single-phase immersion cooling, the cooling of the device is achieved by total and/or precision immersion cooling of the device. Immersion cooling in which the device is totally immersed in an open or closed reservoir that contains liquid coolant, is known as bulk immersion cooling. Immersion cooling in which specific components of the device are targeted to cool, is known as precision immersion cooling. More particularly, a manifold is used to transfer cold liquid coolant directly to the hottest part(s) of the device, such as the CPU (Central Processing Unit) and GPU (Graphics Processing Unit) of a server. As a result, the device is only partially immersed. The device is generally put in an enclosed module (or chassis).

A particular liquid cooling method by direct contact combines total with precision immersion cooling. This method avoids hot spots on the device in the bulk, i.e. when the electrical device is fully immersed.

Upon spray liquid cooling, the cooling of the device is achieved by spraying the liquid coolant is directly on the hottest parts of the device.

The heat-generating devices are usually electrical devices.

As disclosed in the patent application CN117050734A, the most common types of liquid coolants are fluorochemicals and hydrocarbons.

The use of fluorochemicals as liquid coolant for liquid cooling by direct contact is described in the publication Thermal performance evaluation of electronic fluorinated liquids for single-phase immersion liquid cooling, International Journal of Heat and Mass Transfer, 220, 2024, 124951.

Fluorochemicals and hydrocarbons may have a high global warming potential, a high ozone depletion potential, and/or a toxicity profile such as respiratory risk, that needs to be taken into consideration towards the end users.

Among hydrocarbons, the most common types are poly alpha olefins (PAOs), Group III+ base oils according to the American Petroleum Institute (API) classification, and gas to liquid.

Hydrocarbons suffer from a lack of material compatibility, in particular polyvinyl chloride (PVC) compatibility. Indeed, PVC cables immersed in hydrocarbons harden, which in time leads to cracking.

Yet, PVC is one of the most commonly used material for cable insulation.

Power requirements are increasing exponentially over time. Higher density racks, new high-performance batteries, transformers, and power electronics are being developed. All these devices generate more and more heat, which needs to be controlled, requiring more efficient cooling systems.

To cool a growing number of high heat-generating devices in an environmentally friendly way, more efficient coolants are always needed.

Liquid coolants should be stable. Indeed, to avoid having to change the liquid coolant too often, it must not deteriorate too quickly over time.

Unstable liquids may form acidic, soluble contaminants (halogens, metals), and/or insoluble contaminants (sludge) which can cause malfunctions due to corrosion, valve sticking, or change in viscosity of the liquid.

The liquid coolants being in direct contact with the material(s) constituting the electrical device and/or within the cooling system, should exhibit a good compatibility with the material(s) present on and/or around the electrical device.

Preferred material compatibilities are PVC compatibility and copper compatibility. Indeed, PVC is one of the most common materials used for cable insulation, and copper is found on printed circuit boards.

Therefore, there is a need for a liquid coolant to manage the temperature of electrical devices by direct contact, in particular in the fields of informatics (IT) equipment such as servers, and electric vehicles such as batteries, that combines the following features:
- electrical and thermal properties such as:
   - an electrical resistivity of at least 2.0 GOhm·m at 25°C, measured according to the standard DIN 51 111;
   - a specific heat capacity of at least 1.70 kJ/(kg·K) at 20°C, measured according to the standard ASTM E1269;
   - a thermal conductivity of at least 0.130 W/(m.K) at 20°C, measured according to the standard ASTM D7896;
      and :
      - a hydrolytic stability; and
      - a PVC compatibility and/or a copper compatibility.

By "hydrolytic stability of a liquid coolant", it is intended to mean that after mixing the liquid coolant with water in presence of a copper strip at 93°C for 400 hours (method adapted from the standard ASTM D2619), the change in acid number is less than 0.2, preferably less than 0.1, more preferably less than 0.05.

By "PVC compatibility of a liquid coolant", it is intended to mean that after total immersion of the PVC in the liquid coolant for 4 days at 20°C, the PVC presents no more than 20%, preferably no more than 15%, more preferably no more than 10% change in shore A hardness measured according to the standard ISO 7619-2.

By "copper compatibility of a liquid coolant", it is intended to mean that after mixing the liquid coolant with water in presence of a copper strip at 93°C for 400 hours (method adapted from the standard ASTM D2619), the appearance of the copper strip is rated between 1a and 2e, preferably between 1a and 1b, according to the rating described in standard ASTM D 130.

The inventors have found that a specific environmentally-friendly liquid coolant overcomes the shortcomings of the above-described prior art by having several, and preferably all of the above-described features.

Accordingly, the present invention relates to an use of a dialkyl carbonate as a liquid coolant for liquid cooling by direct contact of an electrical device, wherein the dialkyl carbonate is of Formula I:

R¹-O-CO-O-R² (I)
wherein R¹ and R², identical or different, each represents a saturated, acyclic, straight or branched, hydrocarbon chain; and
wherein the sum of carbon atoms comprised in R¹ and R² is between 12 and 20.

The dialkyl carbonates of Formula I are hydrolytically stable.

As illustrated in Example 4, the change in acid number is less than 0.05 mg KOH/g according to the standard ASTM D2619.

This stability is an important feature for the users of this type of liquid coolant, guaranteeing a certain shelf life before having to change it.

The dialkyl carbonates of Formula I are PVC compatible and/or copper compatible.

Preferably, the dialkyl carbonates of Formula I are PVC compatible and copper compatible.

As illustrated in Example 3, the PVC submerged in a dialkyl carbonate of Formula I for 4 weeks at 20°C, presents less than 20% change in shore A hardness measured according to the standard ISO 7619-2.

As shown in Example 4, after submersion of a copper strip in a dialkyl carbonate of Formula I in presence of water, heated to 93°C for 400 hours according to a method adapted from the standard ASTM D2619, the appearance of the copper strip is rated between 1a and 2e according to the rating described in standard ASTM D 130.

In particular, the dialkyl carbonates of Formula I are hydrolytically stable, copper compatible and PVC compatible.

The dialkyl carbonates of Formula I have good electrical and thermal properties, in particular:
- a high electrical resistivity of at least 2 GOhm.m at 25°C;
- a good specific heat capacity of at least 1.70 kJ/(kg.K) at 20°C; and
- a good thermal conductivity, of at least 0.130 W/(m.K) at 20°C.

They also present:
- a low kinematic viscosity at 40°C of less than 10 mm²/s; and
- a high flash point of at least 150°C.

All these features, make the dialkyl carbonates of Formula I suitable for liquid cooling by direct contact of electric devices, in particular electric devices comprising or surrounded by copper and/or PVC.

Preferably, the electrical device comprises or is surrounded by a material such as PVC and/or copper. Indeed, PVC is usually used as an insulating material surrounding electrical wires. Copper is generally present on printed circuit boards.

The electrical device may be:
- a server;
- a battery, in particular a lithium-ion battery or lithium polymer battery;
- a transformer; or
- a drive system of an electric or hybrid vehicle, in particular, the power electronics, the electric motor, the transmission, and/or the battery or battery pack.

Advantageously, in the use according to the invention, the electrical device is a server.

Advantageously, in the use according to the invention, the electrical device is a battery or battery pack of an electric or hybrid vehicle.

In the dialkyl carbonates of Formula I, the hydrocarbon chains R¹ and R² are not substituted. In other words, R¹ and R² consist in carbon and hydrogen atoms.

Preferably, the sum of carbon atoms comprised in the hydrocarbon chains R¹ and R² of the dialkyl carbonate of Formula I, is at least 13, more preferably at least 14.

Preferably, the sum of carbon atoms comprised in the hydrocarbon chains R¹ and R² of the dialkyl carbonate of Formula I, is at most 19, more preferably at most 18.

Preferably, the sum of carbon atoms comprised in the hydrocarbon chains R¹ and R² of the dialkyl carbonate of Formula I, is comprised between 13 and 20, such as between 13 and 19, more preferably between 14 and 18, such as between 15 and 18.

Advantageously, in the use according to the invention, the the sum of carbon atoms comprised in R¹ and R² is 16.

Advantageously, in the use according to the invention, R¹ and R², each represents an octyl or an 2-ethylhexyl group.

The dialkyl carbonate(s) of Formula I is/are obtainable by the process of preparation comprising the following steps:
i) transesterification of diethyl carbonate or dimethyl carbonate with an excess of alkanol(s), in the presence of a catalyst, to form dialkyl carbonate(s) and ethanol or methanol;
ii) distillation of the excess of alkanol(s);
iii) removal of the catalyst.

The alkanol(s) of step i) is/are linear or branched hydrocarbon chain(s) comprising one hydroxyl group.

The alkanol(s) preferably consist(s) of carbon, oxygen, and hydrogen atoms. Preferably, the alkanol(s) is/are saturated.

In step i), the transesterification is preferably heated at a temperature of at least 120°C. Preferably, the transesterification is heated at a temperature comprised between 120°C and 180°C.

In step i), the catalyst is preferably mono butyltin oxide or sodium methoxide.

If sodium methoxide is used, an additional step of neutralization of this catalyst using phosphoric acid is necessary before the step iii).

Preferably, during the transesterification in step i), ethanol or methanol is removed.

Preferably, the transesterification is carried out until complete removal of ethanol or methanol formed during the reaction at step i).

In step ii), the distillation is preferably carried out under vacuum.

In step iii), the removal of the catalyst is preferably done by filtration, such as over activated charcoal and/or silica.

By "removal of the catalyst" it is intended to mean the removal of the catalyst or neutralized catalyst.

Preferably, the process of preparation of dialkyl carbonate(s) of Formula I, comprises a washing step using water, before or after step iii). The purpose of washing the dialkyl carbonate(s) with water, is to avoid the presence of residual salts (metallic and/or organic), and therefore to limit the impact of these salts on the increase in electrical conductivity.

Preferably, the raw materials are obtained from renewable resources.

The present invention relates to the method for cooling an electrical device, by bringing into contact the electrical device with a dialkyl carbonate of Formula I:

R¹-O-CO-O-R² (I)

wherein R¹ and R², identical or different, each represents a saturated, acyclic, straight or branched, hydrocarbon chain; and
wherein the sum of carbon atoms comprised in R¹ and R² is between 12 and 20.

The dialkyl carbonate and the electrical device are as described above, including preferential and advantageous features.

Preferably, the method for cooling an electrical device, is performed with respect of the PVC and/or copper in contact with the dialkyl carbonate, e.g. the dialkyl carbonate of Formula I is PVC compatible and/or copper compatible. More preferably, the method for cooling an electrical device, is performed with respect of PVC and copper in contact with the dialkyl carbonate.

The method for cooling is preferably a single-phase immersion cooling method or a spray liquid cooling method.

The contact between the electrical device and the dialkyl carbonate of Formula I is preferably made by total and/or precision immersion of the electrical device in the dialkyl carbonate of Formula I (in a single-phase immersion cooling method) or spray of the dialkyl carbonate of Formula I on the electrical device (in a spray liquid cooling method). In particular, the contact is made by total and precision immersion.

In the use and method according to the invention, the dialkyl carbonate may be blended with a liquid coolant other than a dialkyl carbonate of Formula I.

Preferably, the liquid coolant other than a dialkyl carbonate of Formula I, is selected among the group consisting of Group III+ base oils according to the American Petroleum Institute (API) classification, poly alpha olefins (PAOs), hydrotreated vegetable oils (HVO), gas-to-liquid (GTL), natural esters, synthetic esters, and mixtures thereof.

In the use and method according to the invention, the dialkyl carbonate may be blended with one or more additive(s) used in the field of lubricants.

A person skilled in the art knows how to select the most suitable additive(s) depending on the application. By way of example, reference may be made to the following manuals: "Fuels and Lubricants Handbook : technology, properties performance and testing", by George E. Totten, 2003 and "Handbook of lubrification and tribology, vol II : Theory and Design", by Robert W. Bruce, 2012.

The additive(s) used in the field of lubricants is/are preferably selected from the group consisting of antioxidants, such as phenolic, aminic compounds; metal passivators; and mixtures thereof.

The invention is further described in the following Examples. It will be appreciated that the invention as claimed is not intended to be limited in any way by these Examples.

### Example 1: Preparation of dialkyl carbonates

### 1.1. Dialkyl carbonates suitable for the use according to the invention

### 1.1.1. Bis(2-ethylhexyl) carbonate

Bis(2-ethylhexyl) carbonate was prepared by transesterification of 1 mol of diethyl carbonate with 2.3 mol of 2-ethylhexanol in presence of 0.5 mol of mono butyltin oxide (MBTO; Tib Kat 256 from Ataman Chemicals) as catalyst. The temperature of the reaction mixture was gradually raised to 160°C. The ethanol formed during the reaction was collected. The reaction was stopped when all the expected ethanol had been recovered. Then, the excess of 2-ethylhexanol was distilled off under vacuum (120°C/100mbars). The catalyst was filtered over activated charcoal (Norit CA3 from Norit) and silica (Daraclar 1015 from Grace).

The bis(2-ethylhexyl) carbonate thus obtained was a colorless and odorless fluid.

### 1.1.2. Dioctyl carbonate

Dioctyl carbonate was prepared according to the method described in Example 1.1.1 using 1-octanol instead of 2-ethylhexanol.

### 1.2. Comparative dialkyl carbonate

Diisostearyl carbonate was prepared according to the method described in Example 1.1.1 using isostearyl alcohol instead of 2-ethylhexanol.

### Example 2: Characteristics of the dialkyl carbonates and of PAO 2

For bis(2-ethylhexyl) carbonate, dioctyl carbonate, and PAO 2 (Synfluid PAO 2 cSt from Chevron Philipps), following characteristics were measured:
- the electrical resistivity according to the standard DIN 51 111;
- the specific heat capacity according to the standard ASTM E1269;
- the thermal conductivity, according to the standard ASTM D7896.
- the kinematic viscosity at 40°C according to the standard ASTM D445;
- the acid value according to the standard AOCS Cd 3d-63;
- the pour point according to the standard ASTM D97;
- the flash point according to the standard ASTM D92;

Results are described in Table 1:

**Table 1: Characteristics of a suitable dialkyl carbonate and PAO 2**

| | Bis(2-ethylhexyl) carbonate | PAO 2 |
|---|---|---|
| Electrical resistivity at 25°C (GΩ.m) | 63.4 | |
| Specific heat capacity at 20°C (kJ/kg. K) | 1.793 | 2.010 |
| Thermal conductivity at 20°C (W/m.K) | 0.1393 | 0.1397 |
| Kinematic viscosity at 40°C (mm²/s) | 4.36 | 5.12 |
| Acid value (mg.KOH/g) | 0.03 | 0.03 |
| Pour point (°C) | -85 | -73 |
| Flash point (°C) | 167 | 159 |

Bis(2-ethylhexyl) carbonate presents all the electrical and thermal properties required for a liquid coolant to be used in a liquid cooling method by direct contact.

Bis(2-ethylhexyl) carbonate presents features comparable to the hydrocarbon oil PAO 2, known for its suitability in liquid cooling methods by direct contact.

### Example 3: Material compatibility

The PVC compatibility was evaluated by immersion of a USB PVC cable (USB A 3.0 RS PRO, 182-8844) into a fluid at room temperature (20°C) during 4 weeks. After this period, the cable was removed from the fluid, dried on paper and the shore A hardness was measured according to the standard ISO 7619-2.

The fluids used were:
- dialkyl carbonates prepared in Example 1;
- PAO 2 used in Example 2.

A blank test corresponding to the hardness of the USB PVC cable not immersed in any fluid was also performed.

The Shore A hardness ranges from 0 to 100. The higher the hardness value, the harder the material and the higher the risk of cracking.

Results are gathered in Table 2.

**Table 2: Shore A hardness of PVC cable immersed or not in different fluids**

| | Blank (not immersed) | Bis(2-ethylhexyl) carbonate | Dioctyl carbonate | Diisostearyl carbonate | PAO 2 |
|---|---|---|---|---|---|
| Shore A Hardness | 70 | 75 | 75 | 91 | 95 |

Bis(2-ethylhexyl) carbonate and dioctyl carbonate outperformed PAO 2 in terms of cable stiffness.

With no more than 10% change in Shore A hardness of the PVC cable after 4 weeks at 20°C, it can be concluded that bis(2-ethylhexyl) carbonate and dioctyl carbonate are suitable for longer time operation than the polyalphaolefin PAO 2, which increase the Shore A hardness of the PVC cable of more than 35%.

With 30% change in Shore A hardness of the PVC cable after 4 weeks at 20°C, it can be concluded that diisostearyl carbonate is not PVC compatible.

### Example 4: Hydrolytic stability

The resistance to hydrolysis was evaluated using the well-known beverage bottle test base on a method adapted from the standard ASTM D2619, in which the fluid tested is mixed with water in a capped bottle, into which a copper strip is added, heated to 93°C and rotated for a longer period than in the ASTM method, i.e. 400 hours instead of the usual 48 hours.

At the end of the test, the acid number (AN) is then determined, along with the water's acidity level. The results reveal the fluid's hydrolytic stability and how well it holds up against acid formation, which coincides with hydrolysis.

The copper strip is removed and the difference in mass is measured, as well as its appearance is determined.

Results are gathered in Table 3.

**Table 3: Hydrolytic stability of dialkyl carbonates heated at 93°C for 400 hours**

| | Bis(2-ethylhexyl) carbonate | Dioctyl carbonate |
|---|---|---|
| Change in acid number (mg KOH/g) | 0.005 | 0.03 |
| Total Acidity of Water Layer (mg KOH/g) | 0.08 | 0.04 |
| Copper appearance | 1b | 1b |
| Copper Weight Loss (mg/cm²) | -0.069 | -0.069 |

Only very slight variations are observed in the acid number of bis(2-ethylhexyl) carbonate and dioctyl carbonate.

Similarly, no significant change were observed in the copper strips.

The one skilled in the art can easily conclude that the dialkyl carbonates tested remain fully stable and are not hydrolyzed.

Rating by copper strip corrosion standard ASTM D130 is as followed:
- 1a-1b slight tarnish;
- 2a-2e moderate tarnish;
- 3a-3b dark tarnish;
- 4a-4c corrosion.

It can be concluded that those dialkyl carbonates don't induce copper corrosion.

This proves the resistance of bis(2-ethylhexyl) carbonate and dioctyl carbonate towards hydrolysis, and hence a long-term stability.

## Claims

1. Use of a dialkyl carbonate as a liquid coolant for liquid cooling by direct contact of an electrical device, wherein the dialkyl carbonate is of Formula I:
R¹-O-CO-O-R² (I)
wherein R¹ and R², identical or different, each represents a saturated, acyclic, straight or branched, hydrocarbon chain; and
wherein the sum of carbon atoms comprised in R¹ and R² is between 12 and 20.

2. Use according to claim 1, wherein the electrical device is a server.

3. Use according to claim 1 or 2, wherein the electrical device is the battery or battery pack of an electric or hybrid vehicle.

4. Use according to any of claims 1 to 3, wherein the the sum of carbon atoms comprised in R¹ and R² is 16.

5. Use according to any of claims 1 to 4, wherein R¹ and R², each represents an octyl or an 2-ethylhexyl group.

6. Method for cooling an electrical device, by bringing into contact the electrical device with a dialkyl carbonate of Formula I:
R¹-O-CO-O-R² (I)
wherein R¹ and R², identical or different, each represents a saturated, acyclic, straight or branched, hydrocarbon chain; and
wherein the sum of carbon atoms comprised in R¹ and R² is between 12 and 20.
